# EUROPÄISCHE PATENTSCHRIFT

(11) **EP 4 701 335 B1**
(45) Veröffentlichungstag und Bekanntmachung des Hinweises auf die Patenterteilung: **02.12.2026**
(21) Anmeldenummer: 25189984.5
(22) Anmeldetag: 16.07.2025
(51) Int. Cl.: H05B 3/26, H05B 1/02

(54) **HEIZVORRICHTUNG UND ELEKTROGERÄT MIT EINER SOLCHEN HEIZVORRICHTUNG**
HEATING DEVICE AND ELECTRIC DEVICE WITH SUCH A HEATING DEVICE
DISPOSITIF DE CHAUFFAGE ET APPAREIL ÉLECTRIQUE DOTÉ D'UN TEL DISPOSITIF DE CHAUFFAGE

(30) Priorität: 20.08.2024 DE 102024123764
(43) Veröffentlichungstag der Anmeldung: 25.02.2026
(73) Patentinhaber: E.G.O. Elektro-Gerätebau GmbH, 75038 Oberderdingen (DE)
(72) Erfinder: Köbrich, Holger, 76703 Kraichtal-Gochsheim (DE); Schmieder, Manuel, 75038 Oberderdingen (DE); Kümmerle, Hannes, 75015 Bretten (DE)
(74) Vertreter: Patentanwälte Ruff, Wilhelm, Beier, Dauster & Partner mbB

(56) Entgegenhaltungen:
- EP-B1- 1 828 068
- EP-B1- 1 935 211
- DE-A1- 102013 200 277
- DE-A1- 102015 205 496

## Beschreibung

### Anwendungsgebiet und Stand der Technik

Die Erfindung betrifft eine Heizvorrichtung mit einem Träger und mindestens einem Heizleiterkreis darauf, der mindestens einen Heizleiter aufweist. Des Weiteren betrifft die Erfindung ein Elektrogerät mit einer solchen Heizvorrichtung, insbesondere ein wasserführendes Haushaltsgerät wie beispielsweise eine Waschmaschine oder eine Spülmaschine.

Aus der WO 2021/170 331 A1 oder der DE 10 2007 058 833 A1 sind Heizvorrichtungen bekannt, wie sie beispielsweise für Waschmaschinen verwendet werden können, die sogenannte Dickschichtheizelemente aufweisen. Auf einem Träger kann, insbesondere wenn dieser aus Metall besteht, eine Basis-Isolationsschicht aufgebracht sein, auf oder über der wiederum ein Heizleiterkreis mit mehreren Heizleitern aufgebracht ist. Hier kann im Betrieb das Problem bestehen, dass bei einer Überhitzung des Dickschichtheizelements die Basis-Isolationsschicht beschädigt werden kann. Wenn dann der Träger aus Metall besteht, kann ein Kurzschluss hin zu dem Dickschichtheizelement oder einem elektrischen Anschluss desselben auftreten mit entsprechender Gefährdung für eine Bedienperson.

Aus der EP 1 828 068 B1 ist eine Heizvorrichtung bekannt mit einem Schichtaufbau, insbesondere mit einem metallischen Träger, auf dem eine Isolationsschicht, eine Sensorschicht, eine weitere Schicht, und darauf eine Heizleiterschicht mit Heizleitern vorgesehen sind.

Ein ähnlicher Schichtaufbau für eine Heizvorrichtung ist aus der DE 10 2015 205 496 A1 bekannt. Eine Schicht ist jeweils ab einer bestimmten Temperatur etwas stromdurchlässig, so dass damit eine Temperatur und insbesondere eine Übertemperatur erfasst werden können, um dem entgegenzuwirken.

Aus der DE 10 2013 200 277 A1 geht ebenfalls eine Heizvorrichtung hervor mit einem Schichtaufbau. Dabei ist eine Schicht als dielektrische Isolationsschicht ausgebildet und zwischen Heizleiter und Elektrodenschicht angeordnet. Sie verliert bei einer bestimmten Temperatur ihre Isolationseigenschaften, und auch das kann für ein Erfassen einer Temperatur und insbesondere einer Übertemperatur verwendet werden.

Aus der EP 1 935 211 B1 ist eine Heizvorrichtung für Flüssigkeiten bekannt, die Heizleiter und eine Schmelzsicherung in deren Nähe aufweist. Diese Schmelzsicherung ist ringförmig geschlossen ausgebildet. Sie hält mindestens einen Schalter in einer Kontaktierungsstellung.

Sobald sie sich bei Erreichen einer zu hohen Temperatur auflöst und ihre Haltefunktion einbüßt, kann sich der Schalter öffnen und einen Kontakt unterbrechen. Dies ist hier die Sicherungsfunktion.

### Aufgabe und Lösung

Der Erfindung liegt die Aufgabe zugrunde, eine eingangs genannte Heizvorrichtung sowie ein damit versehenes Elektrogerät zu schaffen, mit denen Probleme des Standes der Technik gelöst werden können und es insbesondere möglich ist, eine Sicherheit der Heizvorrichtung bzw. des Elektrogeräts im Betrieb zu erhöhen und elektrische Gefahrenquellen auszuschließen.

Gelöst wird diese Aufgabe durch eine Heizvorrichtung mit den Merkmalen des Anspruchs 1 sowie durch ein Elektrogerät mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für die Heizvorrichtung oder nur für das Elektrogerät beschrieben. Sie sollen jedoch unabhängig davon sowohl für eine solche Heizvorrichtung als auch für ein solches Elektrogerät selbständig und unabhängig voneinander gelten können. Der Wortlaut der Ansprüche wird durch ausdrückliche Bezugnahme zum Inhalt der Beschreibung gemacht.

Die Heizvorrichtung weist einen Träger sowie eine elektrisch isolierende Basis-Isolationsschicht auf diesem Träger auf. Vorteilhaft ist diese Basis-Isolationsschicht direkt auf den Träger aufgebracht. Der Träger kann beispielsweise aus Metall bestehen, muss es aber nicht. Dies wird nachfolgend noch näher erläutert. Auf bzw. über der Basis-Isolationsschicht ist mindestens ein Heizleiterkreis angeordnet, der elektrische Anschlüsse aufweist. Vorteilhaft sind diese elektrischen Anschlüsse als Steckanschlüsse ausgebildet, beispielsweise mit direkt auf der Heizvorrichtung befestigten Steckanschlussfahnen oder Steckanschlussbuchsen. Der mindestens eine Heizleiterkreis weist mindestens einen Heizleiter auf, vorteilhaft mehrere, wobei hier vielfältige Konfigurationen möglich sind, wie sie im Wesentlichen auch aus dem Stand der Technik bekannt sind. Dies wird nachfolgend noch näher erläutert.

Erfindungsgemäß ist vorgesehen, dass unterhalb der Basis-Isolationsschicht, die hauptsächlich dazu dient, den Heizleiterkreis oder die Heizleiterkreise direkt elektrisch gegenüber dem Träger zu isolieren, eine elektrisch isolierende Zusatz-Isolationsschicht vorgesehen ist. Diese befindet sich also zwischen Basis-Isolationsschicht und Träger, vorteilhaft ist sie direkt auf eine Oberseite des Trägers aufgebracht, möglicherweise nach deren voriger Oberflächenbehandlung. Es gibt also einen zweischichtigen Aufbau der elektrischen Isolierung zwischen Träger und dem mindestens einen Heizleiterkreis. Vorteilhaft ist für alle Heizleiterkreise der Schichtaufbau aus Zusatz-Isolationsschicht auf dem Träger und Basis-Isolationsschicht darüber gleich. Des Weiteren ist eine elektrisch leitfähige Leitschicht auf der Zusatz-Isolationsschicht vorhanden, und zwar flächig verteilt angeordnet, vorzugsweise als geschlossene Fläche, alternativ als Gitter bzw. Netz. Auf dieser Leitschicht wiederum verläuft die Basis-Isolationsschicht, so dass die Leitschicht zwischen Zusatz-Isolationsschicht und Basis-Isolationsschicht verläuft. Im Wesentlichen gibt es hier also einen mindestens dreischichtigen Aufbau auf dem Träger, nämlich Zusatz-Isolationsschicht, Leitschicht und darüber Basis-Isolationsschicht. Die Leitschicht ist so ausgebildet, dass ein Strom, der durch eine aufgrund eines Störfalls beschädigte Basis-Isolationsschicht von dem Heizleiterkreis durch sie hindurch fließt, in die Leitschicht fließt. Die Leitschicht ist zumindest derart von außen erreichbar oder nach außen geführt, dass ein Masseanschluss an ihr, vorzugsweise direkt an ihr, oder an sie vorgesehen ist. Vorzugsweise ist der Anschluss an Masse bzw. an PE nicht direkt an ihr vorgesehen, sondern sie ist elektrisch leitend mit ihm verbunden. Der Masseanschluss ist an Masse bzw. an PE angeschlossen. Ein solcher Anschluss an Masse bzw. PE-Anschluss ist üblicherweise in Elektrogeräten vorhanden, wenn diese an ein Stromnetz in einem Haushalt angeschlossen sind. Dies ist sehr sinnvoll und auch vorgeschrieben. Die Funktion eines solchen üblichen PE-Anschlusses ist dem Fachmann ja bekannt. Die Leitfähigkeit der Leitschicht sollte so sein, dass im normalen Betrieb bzw. dann, wenn der Strom, der durch den Heizleiterkreis fließt, durch die Leitschicht fließt, diese keine nennenswerte Erwärmung erfährt. Dazu kann ihr elektrischer Widerstand zwischen 5mal und 100mal geringer sein als derjenige der Heizleiter, vorzugsweise kleiner als 0,1 Ohm mm²/m sein.

Schließlich weist die Heizvorrichtung noch eine Schmelz-Sicherung auf, die zwischen Leitschicht und Träger oder zwischen Leitschicht und Masseanschluss vorgesehen ist, und zwar als einzige elektrische Verbindung zwischen Leitschicht und Masseanschluss. Vorteilhaft ist diese Schmelz-Sicherung nicht auswechselbar, sondern fest angeordnet bzw. fest mit der Heizvorrichtung verbunden, besonders vorteilhaft als integraler unlösbarer Bestandteil der Heizvorrichtung.

Durch diesen Aufbau der Heizvorrichtung kann erreicht werden, dass in dem Fall, dass die Basis-Isolationsschicht beschädigt wird bzw. keine vollständige elektrische Isolierung der darauf angeordneten Heizleiter bewirkt und sozusagen elektrisch eine Verbindung des mindestens einen Heizleiters durch die Basis-Isolationsschicht mit der Leitschicht ermöglicht ist, sozusagen kurzzeitig Strom fließen kann von dem Heizleiter in die Leitschicht durch die Basis-Isolationsschicht. Ein solcher Fehlerfall kann auftreten wenn die Heizvorrichtung trocken läuft bzw. die erzeugte Wärme nicht abgenommen werden kann, dies führt zu Temperaturen von 500°C bis 700°C. Dieser Strom durch die Basis-Isolationsschicht fließt dann von der Leitschicht über die elektrische Verbindung hin zum Träger oder hin zum Masseanschluss bzw. PE-Anschluss, wobei es insbesondere die einzige elektrische Verbindung dieser Art sein kann. Dabei fließt der Strom zwingend durch die Schmelz-Sicherung, die so dimensioniert ist, dass sie dabei zerstört wird als originäre Funktion einer Schmelz-Sicherung. Dafür kann sie beispielsweise für eine Zerstörung bei einem Strom von über 100 mA ausgelegt sein, wobei sie für sehr kurze Zeit eben auch einen hohen Strom leiten kann. Die Schmelz-Sicherung kann gemäß üblicher Benennung als flinke Sicherung ausgebildet sein, so dass sie innerhalb von weniger als 100 msec oder innerhalb von weniger als 5 msec bei genannter Stromstärke anspricht bzw. zerstört wird. Wenn die Schmelz-Sicherung durchbrennt ist der Heizleiter in der Regel bereits zerstört.

So wird mit der Erfindung erreicht, dass im Falle einer vorgenannten zu hohen Temperatur aufgrund Betriebs des Heizleiters bzw. Heizleiterkreises, der durchbrennen kann und deswegen die Basis-Isolationsschicht beschädigt wird bzw. zerstört wird und an zumindest einer Stelle ihre elektrisch isolierenden Eigenschaften verliert, die Sicherheit gewährleistet wird. Falls dann ein Strom fließt vom Heizleiterkreis bzw. von einem der Heizleiter durch sie, so fließt er durch die Beschädigung in der Basis-Isolationsschicht in die elektrisch leitfähige Leitschicht darunter, kann also abfließen und nicht auch noch durch die Zusatz-Isolationsschicht zum Träger fließen und diese Zusatz-Isolationsschicht evtl. auch noch beschädigen. Von dort fließt der Strom über die Schmelz-Sicherung hin zum PE-Anschluss. Der so entstehende Stromfluss zerstört eben die Schmelz-Sicherung ab einem gewissen Ausmaß bzw. abhängig davon, wie diese dimensioniert ist. Durch das Vorsehen der Zusatz-Isolationsschicht direkt auf dem Träger bzw. zwischen Träger und Basis-Isolationsschicht ist der Träger auf alle Fälle noch elektrisch isoliert, so dass keine Gefahr für eine Bedienperson bestehen kann. Somit bewirkt das Zerstören bzw. Durchschlagen der obersten elektrischen Isolierung, nämlich der Basis-Isolationsschicht, das Auslösen bzw. Zerstören der Schmelz-Sicherung, die davor sozusagen den Strom noch kurzzeitig an den PE-Anschluss ableiten kann, bevor sie selbst zerstört wird. Das kann wiederum von einer Auswertung der Heizvorrichtung bzw. in einer Steuerung oder Leistungsversorgung für die Heizvorrichtung erkannt werden, beispielsweise weil kein Strom mehr durch den zerstörten Heizleiterkreis fließt, kein Temperaturanstieg mit separaten Temperatursensoren registriert wird oder die Zerstörung der Schmelzsicherung registriert worden ist.

In Weiterbildung der Erfindung ist es möglich, dass jede der genannten Schichten, also Basis-Isolationsschicht, Zusatz-Isolationsschicht und Leitschicht, aus mehreren sequenziell aufgebrachten Schichten besteht. Sie wirken aber jeweils wie eine einzige Schicht.

In vorteilhafter Ausgestaltung der Erfindung ist der Träger elektrisch leitfähig, beispielsweise besteht er aus Metall oder einem sogenannten Dickschicht-Stahl. Der genannte PE-Anschluss ist dann an dem Träger angeordnet, insbesondere direkt darauf angeordnet, vorzugsweise darauf festgeschweißt. Die Schmelz-Sicherung kann von der Leitschicht direkt auf den Träger reichen oder verlaufen, wobei sie sowohl mit diesem als auch mit dem PE-Anschluss, vorteilhaft als Steckanschluss, verbunden ist.

In weiterer Ausgestaltung der Erfindung kann auf dem Träger neben der genannten Zusatz-Isolationsschicht ein elektrisch leitfähiges Kontaktfeld aufgebracht sein, beispielsweise aufgelötet oder aufgeschweißt sein, das mit dem Träger elektrisch leitend verbunden ist. Die Schmelz-Sicherung kann dann von der Leitschicht direkt auf dieses Kontaktfeld reichen und elektrisch mit diesem verbunden sein. Dazu ist vorteilhaft der Träger elektrisch leitfähig ausgebildet und weist den Masseanschluss auf bzw. dieser ist an ihm angeordnet bzw. befestigt. Dabei kann vorteilhaft vorgesehen sein, dass das genannte Kontaktfeld so hoch ist wie die Leitschicht bzw. dass eine Oberseite des Kontaktfelds in etwa so hoch ist wie eine Oberseite der Leitschicht. Dann kann die Schmelz-Sicherung sozusagen parallel zum Träger von der Leitschicht zum Kontaktfeld verlaufen. So kann sie beispielsweise in einem Herstellungsverfahren mittels Lötens, insbesondere mittels SMD-Löten, sicher aufgelegt und befestigt bzw. verlötet werden. Das Kontaktfeld kann dabei einen seitlichen Abstand zur Zusatz-Isolationsschicht und vorteilhaft auch zur Leitschicht aufweisen, damit hier kein Kurzschluss entsteht, der nach Zerstören der Schmelz-Sicherung eventuell weiter besteht. Das Kontaktfeld kann auch zumindest teilweise auf die Zusatz-Isolationsschicht überlappen.

In alternativer Ausgestaltung der Erfindung kann auf der Zusatz-Isolationsschicht selbst ein Zusatz-Kontaktfeld aufgebracht sein, das wiederum mit dem Masseanschluss bzw. dem PE-Anschluss elektrisch leitfähig verbunden ist. Dann ist die Schmelz-Sicherung mit diesem Zusatz-Kontaktfeld elektrisch leitfähig verbunden. Während also im zuvor beschriebenen ersten Fall der elektrische Kontakt mit dem Träger und einem daran vorgesehenen Masseanschluss bzw. PE-Anschluss besteht, ist im hier beschriebenen zweiten Fall ein elektrischer Anschluss über die Schmelz-Sicherung nur an den Masseanschluss gegeben. Es wird somit ein weiterer Masseanschluss bzw. PE-Anschluss benötigt, da der Träger, insbesondere wenn die Heizvorrichtung zum Heizen von Wasser vorgesehen ist, einen eigenen solchen Masseanschluss haben sollte.

In Ausgestaltung der Erfindung kann die Schmelz-Sicherung metallisch bzw. als Metallteil ausgebildet sein, vorteilhaft als freiliegendes bzw. als frei verlaufendes Metallteil. Bevorzugt ist die Schmelz-Sicherung als SMD-Bauteil ausgebildet, so dass sie an der Heizvorrichtung mittels SMD-Lötens befestigt und elektrisch kontaktiert werden kann. Dies ermöglicht ein automatisiertes Befestigen und Kontaktieren.

In Weiterbildung der Erfindung kann die Schmelz-Sicherung als sogenannte schnelle bzw. flinke Schmelz-Sicherung ausgebildet sein. Sie kann für eine Reaktionszeit von weniger als 50 msec ausgebildet sein, vorteilhaft weniger als 5 msec, so dass sie bei Durchfluss einer spezifischen Stromstärke oder einer höheren Stromstärke nach spätestens 50 msec oder 5 msec durchgebrannt ist. Allgemein kann dieses Durchbrennen der Schmelz-Sicherung von einer Steuerung, die die Heizvorrichtung steuert bzw. die deren Leistungsversorgung bewirkt, erkannt werden. So kann beispielsweise über eine elektrische Kontaktierung an die Leitschicht einerseits und an den Masseanschluss andererseits ein Prüf-Stromkreis gebildet werden, durch den ein Prüfstrom fließt, also auch durch die Schmelz-Sicherung hindurch. Ist diese zerstört, wird der Prüf-Stromkreis unterbrochen, was als Zeichen für die Zerstörung und somit einen Ausfall der Basis-Isolationsschicht und damit auch der gesamten Heizvorrichtung gewertet werden kann. In der Regel ist diese Heizvorrichtung dann dauerhaft funktionsuntüchtig und zerstört, was aber ohnehin am Durchbruch bzw. an der Zerstörung der Basis-Isolationsschicht liegt, sie muss dann ausgetauscht werden.

Eine vorgenannte Stromstärke, bei deren Erreichen die Schmelz-Sicherung zerstört wird bzw. durchbrennt, insbesondere innerhalb der vorgenannten Zeit, kann bei maximal 0,5 A liegen. Vorteilhaft ist sie geringer, beispielsweise liegt sie bei maximal 0,1 A. Somit reichen auch relativ geringe Beschädigungen an der Basis-Isolationsschicht und relativ geringe Stromflüsse durch diese hindurch und über die Leitschicht an die Schmelz-Sicherung, um diese auszulösen bzw. zu zerstören. Dennoch kann die Schmelz-Sicherung für sehr kurze Zeit auch deutlich höhere Ströme leiten.

Die Schmelz-Sicherung sollte vorteilhaft so ausgebildet sein, dass sie dann, wenn sie durchgebrannt bzw. zerstört worden ist, die Zusatz-Isolationsschicht nicht beschädigt, so dass diese auf alle Fälle weiterhin die Heizleiter gegen den Träger elektrisch isolieren kann. Somit dient die Leitschicht samt der Schmelz-Sicherung dazu, diese elektrische Isolierung des Trägers auf alle Fälle zu schützen und aufrechtzuerhalten. Dies dient einer erhöhten Sicherheit der Heizvorrichtung bzw. auch des damit versehenen Elektrogeräts in seinem Betrieb.

In Weiterbildung der Erfindung können die Leitschicht und die Basis-Isolationsschicht eine derartige flächige Ausdehnung aufweisen, dass die Heizleiter des mindestens einen Heizleiterkreises, insbesondere eines einzigen Heizleiterkreises, darin bzw. darüber verlaufen. Des Weiteren sollte die Basis-Isolationsschicht innerhalb der flächigen Ausdehnung der Leitschicht verlaufen, so dass bei jeglichem Durchbruch der Basis-Isolationsschicht ein Teil der Leitschicht sozusagen frei wird oder freiliegt. In Weiterbildung der Erfindung kann vorgesehen sein, dass die Leitschicht korrespondierend zu dem mindestens einen Heizleiter oder allen Heizleitern eines Heizleiterkreises verläuft. Dabei kann im Falle von mehreren Heizleiterkreisen vorgesehen sein, dass jeder von ihnen seine eigene Leitschicht aufweist. Diese Leitschichten können dann vorteilhaft voneinander getrennt sein. Alternativ kann eine durchgängig elektrisch leitfähig verbundene bzw. gemeinsame Leitschicht vorgesehen sein. Allerdings sollte auch bei einem derartigen korrespondierenden Verlauf die Leitschicht zwar korrespondierend zu den Heizleitern verlaufen, diese aber in der Breite überragen.

In möglicher Ausgestaltung der Erfindung kann die Leitschicht flächig ausgebildet sein, möglicherweise mindestens 70% bis 90% des Trägers bzw. der Zusatz-Isolationsschicht bedecken. Sie kann eine geschlossene Fläche bilden. Alternativ kann die Leitschicht auch als Netz bzw. als Gitter ausgebildet sein, wobei eine Gesamtfläche der Netzleiter oder Gitterleiter geringer ist als eine nicht bedeckte Gesamtfläche der Zusatz-Isolationsschicht. Alternativ kann die Leitschicht auch mäanderförmig und in Bahnen verlaufen, wobei dies bevorzugt auch für die Heizleiter darüber gilt, so dass vorteilhaft die Form der Leitschicht an die Form der Heizleiter angepasst sein kann. Diese Bahnen können eine Breite von maximal 3 mm aufweisen, wobei die Heizleiter eine Breite von maximal 2,5 mm oder maximal 2 mm aufweisen sollten. Vorzugsweise sollte die Breite der Bahnen einer mäanderförmigen Leitschicht die maximale Breite der Heizleiter haben oder 5% bis 50% übertreffen. In diesem Fall kann die Leitschicht sozusagen zwischen allen Heizleitern und dem Träger bzw. der Zusatz-Isolationsschicht verlaufen.

In Weiterbildung der Erfindung kann die Heizvorrichtung mehrere getrennt voneinander betreibbare Heizleiterkreise aufweisen, wobei jeder dieser Heizleiterkreise mindestens einen Heizleiter aufweist, vorteilhaft mehrere Heizleiter. Dann kann für jeden dieser Heizleiterkreise eine eigene und entsprechend flächig ausgedehnte Leitschicht vorgesehen sein, wobei jeder dieser Heizleiterkreise auf und innerhalb der Grenzen dieser Leitschicht verläuft.

Es kann vorgesehen sein, dass die Schmelz-Sicherung und die gesamte Heizvorrichtung so ausgebildet sind, dass eine gemeinsame Basis-Isolationsschicht für sämtliche Leitschichten unterhalb sämtlicher Heizleiterkreise vorgesehen ist. Dabei kann für jeden Heizleiterkreis und jede zugehörige Leitschicht eine eigene Schmelz-Sicherung vorgesehen sein, die eine elektrisch leitende Verbindung zu einem Masseanschluss aufweist. So kann erkannt werden, welche der mehreren Schmelz-Sicherungen aufgrund einer beschädigten Basis-Isolationsschicht unterhalb eines bestimmten Heizleiters durchbrennt. Dann kann dieser Heizleiterkreis von der Steuerung wie vorbeschrieben abgeschaltet werden. Mit den anderen Heizleiterkreisen kann dann ein weiterer Betrieb fortgesetzt werden, möglicherweise als Notfallbetrieb, was aber immer noch besser sein kann als gar kein möglicher Betrieb mehr. Möglich wäre es hier, drei oder vier separate Heizleiterkreise vorzusehen, die möglicherweise ähnlich groß sind bzw. eine ähnliche Heizleistung aufweisen.

In Weiterbildung der Erfindung kann mindestens ein Temperatursensor an der Heizvorrichtung angeordnet sein. Eine günstige Anordnung hierfür ist auf oder über der Basis-Isolationsschicht im Bereich eines Heizleiterkreises bzw. eines seiner Heizleiter, vorzugsweise mit einem Abstand von weniger als 3 cm. Mittels dieses Temperatursensors kann dann auch ein prägnanter Fall einer Übertemperatur an der Heizvorrichtung erkannt werden, und zwar zusätzlich dazu, dass möglicherweise kurz danach die Basis-Isolationsschicht durchschlagen wird bzw. lokal zerstört wird mit den vorbeschriebenen Möglichkeiten, dies zu erkennen.

Es wird als bevorzugt angesehen, wenn auf einer freiliegenden Oberseite des Heizleiterkreises bzw. seiner Heizleiter eine Abdeckung vorgesehen ist, insbesondere als elektrische Isolierung, als Schutz gegen Zerstörung und als Schutz gegen Verschmutzung. Diese Abdeckschicht sollte sämtliche Heizleiter eines Heizleiterkreises und vorteilhaft sämtliche Heizleiterkreise der Heizvorrichtung abdecken. Bevorzugt erfolgt dies mit einer einzigen und gemeinsamen Abdeckschicht. Dabei kann die Abdeckschicht ähnlich wie die Basis-Isolationsschicht und/oder die Zusatz-Isolationsschicht glasartig sein oder Glas als Anteil aufweisen für seine sehr guten elektrischen Isolationseigenschaften und Temperaturbeständigkeit.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Rückansicht eines Dampfgarers als erfindungsgemäßes Elektrogerät mit einem Dampfgenerator an der Rückseite, der eine erfindungsgemäße Heizvorrichtung aufweist,
- Fig. 2: eine vereinfachte schematische Schnittdarstellung durch eine erfindungsgemäße Heizvorrichtung und
- Fig. 3: eine Draufsicht auf eine konkrete Ausgestaltung einer erfindungsgemäßen Heizvorrichtung.

### Detaillierte Beschreibung der Ausführungsbeispiele

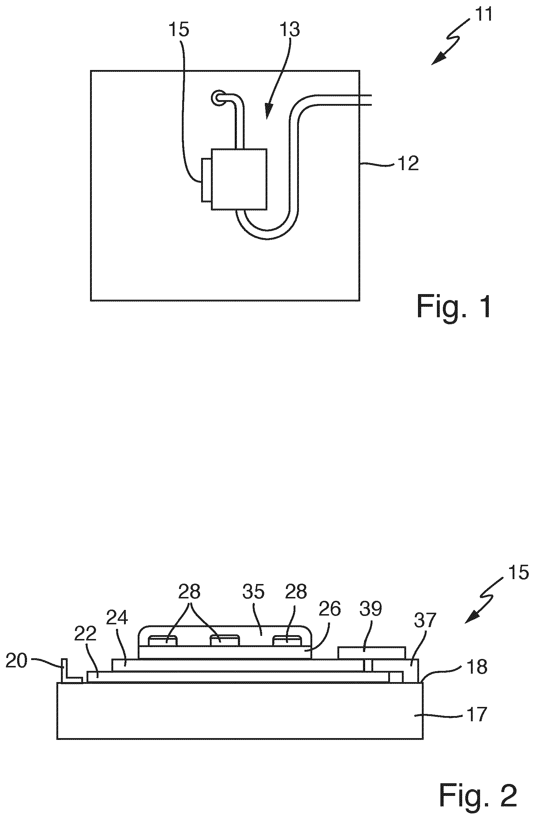

In der Fig. 1 ist ein Dampfgarer 11 als erfindungsgemäßes Elektrogerät dargestellt, er ist sogar ein wasserführendes Haushaltsgerät wie eingangs genannt. Der Dampfgarer 11 weist ein Gehäuse 12 auf, an dessen Rückseite auf bekannte Art und Weise ein Dampfgenerator 13 angeordnet ist. Dieser Dampfgenerator 13 weist eine erfindungsgemäße Heizvorrichtung 15 auf. Mit dieser kann auf bekannte Art und Weise Wasser in einer Dampferzeugungskammer odgl. verdampft werden, und dieser Dampf wird dann in das Innere des Dampfgarers 11 zur Zubereitung von Nahrungsmitteln eingeleitet. Eine Heizleistung für einen derartigen Dampfgenerator 13 bzw. einen Dampfgarer 11 sollte relativ hoch sein, damit möglichst schnell eine ausreichende Menge an Dampf erzeugt werden kann. Gleichzeitig muss eine hohe Sicherheit eingehalten werden, da das Gehäuse 12 des Dampfgarers 11 durchaus von einer Bedienperson berührt werden kann, und an seiner Rückseite ist ja der Dampfgenerator 13 angeordnet.

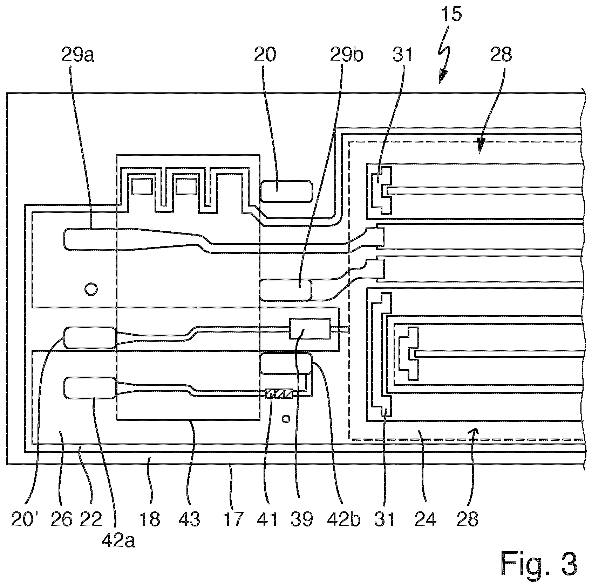

Aus der schematischen Schnittdarstellung der Fig. 2 ist zu erkennen, dass ein flacher Träger 17 aus Metall bereitgestellt wird. Er kann vorteilhaft eben bzw. plan ausgebildet sein, dies muss aber nicht so sein. Auf einer Trägeroberseite 18 ist ganz links ein PE-Anschluss 20 entsprechend einem eingangs genannten Masseanschluss vorgesehen. Vorteilhaft ist er als Kontakt ausgebildet, beispielsweise als abstehender Steckkontakt. Wie die Fig. 3 zeigt, kann er entweder direkt auf die Trägeroberseite 18 aufgebracht werden, beispielsweise aufgelötet oder aufgeschweißt. Alternativ kann er auch an ein darauf vorgesehenes Kontaktfeld aufgebracht werden. Dieser PE-Anschluss dient auf bekannte Art und Weise auch zur Sicherheit des Betriebs der Heizvorrichtung 15.

Einen wesentlichen Bereich der Oberfläche des Trägers 17 bzw. der Trägeroberseite 18 wird von einer Zusatz-Isolationsschicht 22 bedeckt. Diese kann auf bekannte Art und Weise glasartig bzw. glashaltig sein. Sie kann durch Siebdruckverfahren mit entsprechender Paste auf die Trägeroberseite 18 aufgebracht und dann eingebrannt werden. Sie kann einschichtig ausgebildet sein, alternativ auch mehrschichtig.

Auf die Zusatz-Isolationsschicht 22 und mit etwas geringerer Größe kann eine Leitschicht 24 aufgebracht werden. Sie kann entweder als geschlossene Fläche aufgebracht werden, alternativ in Netzform oder Gitterform, wie dies an sich aus dem Stand der Technik bekannt ist. Die Leitschicht 24 ist elektrisch leitfähig bzw. besteht aus elektrisch leitfähigem Material, kann also Graphit und/oder Metall enthalten.

Auf die Leitschicht 24 wiederum ist eine sogenannte Basis-Isolationsschicht 26 aufgebracht, und zwar mit etwas kleinerer Fläche bzw. kleinerer Kontur. Sie kann aus ähnlichem oder gleichem Material wie die Zusatz-Isolationsschicht 22 bestehen. Sie kann auch auf dieselbe Art und Weise aufgebracht werden, möglicherweise auch als eine einzige Schicht oder mehrschichtig.

Oben auf der Basis-Isolationsschicht wiederum sind schematisch drei Heizleiter 28 aufgebracht, was nur für dieses Ausführungsbeispiel gilt, es könnten mehr oder weniger sein. Es sind vorteilhaft Dickschicht-Heizleiter, die durch ein Siebdruckverfahren aufgebracht und dann eingebrannt werden. Hierzu wird auf den eingangs genannten Stand der Technik verwiesen.

Die Heizleiter 28 wiederum werden von einer Abdeckschicht 35 nach oben abgedeckt, so dass sie vollständig verschlossen sind und sowohl gegen mechanische Beschädigung von außen als auch gegen Kontakt mit Luftsauerstoff gesichert sind. Außerdem können sie so ggf. auch elektrisch isoliert werden bei einer geeigneten Abdeckschicht. Die Heizleiter 28 sind auf nicht dargestellte Art und Weise elektrisch angeschlossen.

Rechts ist auf die Trägeroberseite 18 eine Art stufig ausgebildetes Kontaktfeld 37 aufgebracht, das auf die Zusatz-Isolationsschicht 22 überlappt. Dieses Überlappen wird vorgesehen, damit eine Oberseite des Kontaktfelds 37 in etwa auf demselben Höhenniveau liegt wie eine Oberseite der Leitschicht 24. Somit könnte das Kontaktfeld 37 auch einfach neben der Zusatz-Isolationsschicht 22 vorgesehen sein, aber mit entsprechender Höhe. Diese Höhe des Kontaktfelds 37 weist den Vorteil auf, dass dann eine erfindungsgemäße Schmelz-Sicherung als SMD-Bauteil mit einem Ende auf dieses Kontaktfeld 37 aufgelegt und dort befestigt sowie elektrisch kontaktiert werden kann. Das andere linke Ende liegt auf der Leitschicht 24 oder einem Ausläufer davon auf. Somit ist die Schmelz-Sicherung 39 die einzige elektrische Verbindung von der Leitschicht 24 nach außen, und zwar über das Kontaktfeld 37 und den elektrisch leitfähigen Träger 17, der aus Metall besteht, an den PE-Anschluss 20.

Aus der Darstellung der Fig. 2 ist leicht zu ersehen, dass in dem Fall, dass die Heizleiter 28 betrieben werden und somit stromdurchflossen sind und zu viel Wärme entwickeln, die Basis-Isolationsschicht 26 beschädigt werden kann. Eine Beschädigung der Basisisolation kann durch örtliche bzw. partielle Kalkanhaftung an der Wasserseite bzw. Unterseite des Trägers 17 oder durch flächige Überhitzung, beispielsweise durch Trockenlaufen, auftreten. Die von den Heizleitern 28 erzeugte Wärme wird dann nicht ausreichend abgeführt, die eingangs genannten Probleme treten auf.

Geht diese Beschädigung so weit, dass die Basis-Isolationsschicht 26 durchbrennt bzw. durchbricht oder ihre Isolationseigenschaften verliert, so kann ein Strom von den Heizleitern 28 durch die Basis-Isolationsschicht 26 bzw. ihre beschädigte Stelle zur Leitschicht 24 und von dieser über die Schmelz-Sicherung 39 zum Kontaktfeld 37, Träger 17 und PE-Anschluss 20 fließen. Ist dieser Strom so groß, dass er die vorgenannten 0,5 A oder 0,1 A überschreitet, so brennt die Schmelz-Sicherung 39 bei entsprechender Auslegung beispielsweise nach 5 msec durch. Die Sicherung sollte so ausgelegt sein, dass der Heizleiter unterbrochen ist, also ein weiterer Betrieb nicht möglich ist. Die Ableitung des Stromes über die Leitschicht führt dazu, dass die zusätzliche Isolation nicht betroffen ist und die normtechnisch geforderte Isolation nach Ausfall noch vorhanden ist. Eine Überwachung der Sicherung kann erfolgen, ist aber nicht zwingend erforderlich.

So geht der elektrische Kontakt zwischen Leitschicht 24 und Kontaktfeld 37 und somit letztlich PE-Anschluss 20 verloren. Dies kann als Fehlerfall erkannt und entsprechend ausgewertet werden, beispielsweise weil für sehr kurze Zeit Strom über den PE-Anschluss 20 abgeflossen ist, oder weil eine elektrische Verbindung zwischen Leitschicht 24 einerseits und PE-Anschluss 20 andererseits unterbrochen worden ist. Hierfür kennt der Fachmann genügend Möglichkeiten zur Auswertung, dies muss nicht näher erläutert werden.

In der Fig. 3 ist eine Draufsicht auf eine detaillierte Ausgestaltung einer erfindungsgemäßen Heizvorrichtung 15 dargestellt. Ein flacher metallischer Träger 17 weist an seiner Trägeroberseite 18 die Zusatz-Isolationsschicht 22 auf. Am Träger 17 bzw. an seiner Trägeroberseite 18 ist ein erster PE-Anschluss 20 vorgesehen, der also direkt an den Träger 17 geht. Ein zweiter PE-Anschluss 20' ist ganz links vorgesehen, der über eine Leiterbahn und eine Schmelz-Sicherung 39 an eine netzartig ausgebildete Leitschicht 24 geht, die gestrichelt dargestellt ist. Eine solche netzartige Ausbildung ist grundsätzlich bekannt.

Auf der Trägeroberseite 18 ist die netzartige Leitschicht 24 neben bzw. auf der speziell ausgebildeten Zusatz-Isolationsschicht 22 aufgebracht, allerdings nur im rechten Bereich bzw. nicht im linken Bereich. Rechts neben der Schmelz-Sicherung 39 ist zu erkennen, wie eine Art Leiterbahn von der Leitschicht 24 abgeht und zu der Schmelz-Sicherung 39 als deren Kontaktierung führt.

Auf der Leitschicht 24 wiederum ist eine Basis-Isolationsschicht aufgebracht, die den zweiten PE-Anschluss 20' und die Schmelz-Sicherung 39 ausnimmt, also nicht bedeckt. Auf der Basis-Isolationsschicht 26 wiederum sind die länglichen und gerade verlaufenden Heizleiter 28 vorgesehen. Sie verlaufen in parallelen Bahnen mit Biegungen um 180° bzw. mit Kurzschlussbrücken 31 an den Enden. Die Heizleiter 28 bilden einen einzigen Heizleiterkreis bzw. weisen nur zwei Heizleiterkontakte 29a und 29b auf. Es könnten aber auch zwei oder noch mehr Heizleiterkreise vorgesehen sein, die separat angesteuert bzw. separat betrieben werden können.

Nicht dargestellt, aber leicht vorstellbar in der Fig. 3 ist eine Abdeckschicht, die beispielsweise in etwa entsprechend der Ausdehnung der Leitschicht 24 verlaufen kann.

Im Falle eines Fehlers an der Basis-Isolationsschicht 26 oder einer Beschädigung wird Strom von einem der Heizleiter 28 durch die Basis-Isolationsschicht 26 und die Leitschicht 24 fließen. Dieser Strom wird durch die Schmelz-Sicherung 39 fließen und diese entsprechend schmelzen bzw. durchbrennen lassen. Dann ist die elektrische Verbindung an den PE-Anschluss 20' entfernt bzw. besteht nicht mehr. Dies kann auf vorbeschriebene Art und Weise erkannt werden.

Eine Steckerwanne 43 ist gepunktet dargestellt, wie sie beispielsweise aus der EP 2 741 371 A1 bekannt ist. In dieser können Steckanschlussfahnen gehalten sein, die mit seitlich herausstehenden Füßen auf dem PE-Anschluss 20 und 20' und den Heizleiterkontakten 29a und 29b aufliegen und dort festgelötet oder festgeschweißt sind. Dies dient einer schnellen und einfachen elektrischen Kontaktierung mittels eines entsprechenden Steckers.

Eine separate Temperaturerfassung kann durch einen Temperatursensor 41 erfolgen, der vorteilhaft auf der Basis-Isolationsschicht 26 aufliegt, besonders vorteilhaft als SMD-Temperatursensor. Er weist zwei Temperatursensorkontaktfelder 42a und 42b auf, die ebenfalls mittels des genannten Steckers elektrisch kontaktiert werden können.

Aus den Darstellungen ist leicht zu ersehen, dass in dem Fall, dass mehrere getrennte Heizleiterkreise vorhanden sind, diese jeweils eine eigene Schmelz-Sicherung haben sollten. So kann erreicht werden, dass auch nur ein einziger Heizleiterkreis ausfällt bzw. dauerhaft abgeschaltet wird, ein möglicher Heizbetrieb kann dann weiterhin erfolgen.

## Patentansprüche

1. Heizvorrichtung (15) mit:
- einem Träger (17),
- einer elektrisch isolierenden Basisisolationsschicht (26) auf dem Träger (17),
- mindestens einem Heizleiterkreis auf der Basisisolationsschicht (26), wobei der mindestens eine Heizleiterkreis mindestens einen Heizleiter (28) aufweist,
- elektrischen Anschlüssen (29) an den Heizleiterkreis, wobei
- unterhalb der Basisisolationsschicht (26) und zwischen Basisisolationsschicht (26) und Träger (17) eine elektrisch isolierende Zusatz-Isolationsschicht (22) auf dem Träger (17) angeordnet ist,
- eine elektrisch leitfähige Leitschicht (24) auf der Zusatz-Isolationsschicht (22) flächig verteilt angeordnet ist derart, dass die Basisisolationsschicht (26) auf der Leitschicht (24) angeordnet ist, **dadurch gekennzeichnet, dass**
- ein Masseanschluss (20) an dem Träger (17) oder an der Zusatz-Isolationsschicht (22) vorgesehen ist, der an Masse angeschlossen ist, und dass
- eine Schmelz-Sicherung (39) zwischen Leitschicht (24) und Träger (17) bzw. Masseanschluss (20) als einzige elektrische Verbindung zwischen Leitschicht (24) und Träger (17) bzw. Masseanschluss (20) angeordnet ist.

2. Heizvorrichtung nach Anspruch 1, **dadurch gekennzeichnet, dass** der Träger (17) elektrisch leitfähig ist und der Masseanschluss (20) an dem Träger (17) angeordnet ist, wobei die Schmelz-Sicherung (39) von der Leitschicht (24) direkt auf den Träger (17) reicht und elektrisch mit diesem und somit mit dem Masseanschluss (20) verbunden ist.

3. Heizvorrichtung nach Anspruch 1 oder 2, **dadurch gekennzeichnet, dass** auf dem Träger (17) neben der Zusatz-Isolationsschicht (22) ein elektrisch leitfähiges Kontaktfeld (37) aufgebracht ist und die Schmelz-Sicherung (39) von der Leitschicht (24) direkt auf das Kontaktfeld (37) reicht und elektrisch leitend mit diesem verbunden ist, wobei der Träger (17) elektrisch leitfähig ist und den Masseanschluss (20) aufweist, wobei vorzugsweise das Kontaktfeld (37) so hoch ist, dass eine Oberseite des Kontaktfelds (37) auf der Höhe einer Oberseite der Leitschicht (24) liegt.

4. Heizvorrichtung nach Anspruch 1, **dadurch gekennzeichnet, dass** auf der Zusatz-Isolationsschicht (22) ein Zusatz-Kontaktfeld aufgebracht ist und das Zusatz-Kontaktfeld elektrisch leitfähig mit einem Masseanschluss (20) verbunden ist, wobei die Schmelz-Sicherung (39) mit dem Zusatz-Kontaktfeld elektrisch leitfähig verbunden ist.

5. Heizvorrichtung nach einem der vorhergehenden Ansprüche, **dadurch gekennzeichnet, dass** die Schmelz-Sicherung (39) als Metallteil ausgebildet ist, vorzugsweise als freiliegendes bzw. frei verlaufendes Metallteil, wobei insbesondere die Schmelz-Sicherung (39) als SMD-Bauteil ausgebildet ist zur Befestigung und elektrischen Kontaktierung mittels SMD-Lötens.

6. Heizvorrichtung nach einem der vorhergehenden Ansprüche, **dadurch gekennzeichnet, dass** die Schmelz-Sicherung (39) als flinke Schmelz-Sicherung (39) ausgebildet ist, insbesondere mit einer Reaktionszeit von weniger als 50 msec.

7. Heizvorrichtung nach einem der vorhergehenden Ansprüche, **dadurch gekennzeichnet, dass** die Schmelz-Sicherung (39) derart ausgebildet ist, dass sie bei Erreichen einer Stromstärke von maximal 0,5 A durchbrennt, vorzugsweise bei Erreichen einer Stromstärke von maximal 0,1 A.

8. Heizvorrichtung nach einem der vorhergehenden Ansprüche, **dadurch gekennzeichnet, dass** die Schmelz-Sicherung (39) derart ausgebildet ist, dass nach ihrem Durchbrennen die Zusatz-Isolationsschicht (22) ohne Beschädigung die Heizleiter (28) gegen den Träger (17) elektrisch isoliert.

9. Heizvorrichtung nach einem der vorhergehenden Ansprüche, **dadurch gekennzeichnet, dass** die Leitschicht (24) und die Basisisolationsschicht (26) eine flächige Ausdehnung aufweisen, innerhalb derer die Heizleiter (28) des Heizleiterkreises verlaufen, wobei vorzugsweise die Basisisolationsschicht (26) innerhalb der flächigen Ausdehnung der Leitschicht (24) verläuft.

10. Heizvorrichtung nach einem der vorhergehenden Ansprüche, **dadurch gekennzeichnet, dass** die Leitschicht (24) als Netz bzw. als Gitter ausgebildet ist.

11. Heizvorrichtung nach einem der vorhergehenden Ansprüche, **dadurch gekennzeichnet, dass** die Leitschicht (24) in Bahnen mit einer Breite von max. 3 mm ausgebildet ist, wobei vorzugsweise die Bahnen mäanderförmig verlaufen.

12. Heizvorrichtung nach einem der vorhergehenden Ansprüche, **dadurch gekennzeichnet, dass** sie mehrere getrennt betreibbare Heizleiterkreise mit jeweils mindestens einem Heizleiter (28) aufweist, wobei für jeden Heizleiterkreis eine eigene und entsprechend flächig ausgedehnte Leitschicht (24) vorgesehen ist, innerhalb derer dieser Heizleiterkreis flächig verläuft, wobei vorzugsweise die Heizvorrichtung (15) derart ausgebildet ist, dass eine gemeinsame Basisisolationsschicht (26) für sämtliche Leitschichten (24) unterhalb sämtlicher Heizleiterkreise vorgesehen ist, wobei insbesondere für jeden Heizleiterkreis und jede zugehörige Leitschicht (24) eine eigene Schmelz-Sicherung (39) mit elektrisch leitender Verbindung zu einem Masseanschluss (20) vorgesehen ist.

13. Heizvorrichtung nach einem der vorhergehenden Ansprüche, **dadurch gekennzeichnet, dass** mindestens ein Temperatursensor (41) an der Heizvorrichtung (15) angeordnet ist, insbesondere auf oder über der Basisisolationsschicht (26) im Bereich eines Heizleiterkreises bzw. seiner Heizleiter (28).

14. Heizvorrichtung nach einem der vorhergehenden Ansprüche, **dadurch gekennzeichnet, dass** der Heizleiterkreis bzw. seine Heizleiter (28) von einer Abdeckschicht abgedeckt sind und nach außen elektrisch isoliert sind, insbesondere sämtliche Heizleiter (28) eines Heizleiterkreises, wobei vorzugsweise sämtliche Heizleiterkreise der Heizvorrichtung (15) mit einer gemeinsamen Abdeckschicht abgedeckt sind, wobei insbesondere die Abdeckschicht auf die Basisisolationsschicht (26) verläuft, aber nicht auf die unter der Basisisolationsschicht (26) befindliche Leitschicht (24).

15. Elektrogerät (11) mit mindestens einer Heizvorrichtung (15) nach einem der vorhergehenden Ansprüche, **dadurch gekennzeichnet, dass** das Elektrogerät ein wasserführendes Haushaltsgerät (11) ist und die Heizvorrichtung (15) fließendes oder stehendes Wasser in einem Wasserbehälter, in einem Wasserdurchlauf oder in einer Pumpe erhitzt.

## Claims

1. Heating device (15) comprising:
- a carrier (17),
- an electrically insulating base insulation layer (26) on the carrier (17),
- at least one heating conductor circuit on the base insulation layer (26), wherein the at least one heating conductor circuit comprises at least one heating conductor (28),
- electrical connections (29) to the heating conductor circuit,
wherein
- an electrically insulating additional insulation layer (22) is arranged on the carrier (17) beneath the base insulation layer (26) and between the base insulation layer (26) and the carrier (17),
- an electrically conductive conductive layer (24) is distributed over the entire surface of the additional insulating layer (22) such that the base insulating layer (26) is arranged on top of the conductive layer (24),
**characterized in that**
- a ground connection (20) is provided on the carrier (17) or on the additional insulating layer (22), which is connected to ground, and that
- a fuse (39) is arranged between the conductive layer (24) and the carrier (17) or the ground connection (20) as the sole electrical connection between the conductive layer (24) and the carrier (17) or the ground connection (20).

2. A heating device according to claim 1, **characterized in that** the carrier (17) is electrically conductive and the ground connection (20) is arranged on the carrier (17), wherein the fuse (39) extends from the conductive layer (24) directly to the carrier (17) and is electrically connected thereto and thus to the ground connection (20).

3. Heating device according to claim 1 or 2, **characterized in that** an electrically conductive contact field (37) is applied to the carrier (17) adjacent to the additional insulating layer (22), and the fuse (39) extends directly from the conductive layer (24) to the contact field (37) and is electrically conductively connected thereto, wherein the carrier (17) is electrically conductive and comprises the ground connection (20), and wherein the contact field (37) is preferably of such a height that an upper surface of the contact field (37) lies at the same level as an upper surface of the conductive layer (24).

4. Heating device according to claim 1, **characterized in that** an additional contact field is applied to the additional insulation layer (22) and the additional contact field is electrically conductively connected to a ground connection (20), wherein the fuse (39) is electrically conductively connected to the additional contact field.

5. A heating device according to one of the preceding claims, **characterized in that** the fuse (39) is designed as a metal part, preferably as an exposed or freely extending metal part, wherein, in particular, the fuse (39) is designed as an SMD component for mounting and electrical connection by means of SMD soldering.

6. A heating device according to one of the preceding claims, **characterized in that** the fuse (39) is designed as a fast-acting fuse (39), in particular with a response time of less than 50 msec.

7. A heating device according to one of the preceding claims, **characterized in that** the fuse (39) is designed such that it blows when a current of at most 0.5 A is reached, preferably when a current of at most 0.1 A is reached.

8. A heating device according to any of the preceding claims, **characterized in that** the fuse (39) is designed such that, after it blows, the additional insulating layer (22) electrically insulates the heating conductor (28) from the carrier (17) without being damaged.

9. Heating device according to one of the preceding claims, **characterized in that** the conductive layer (24) and the base insulation layer (26) have a planar extent within which the heating conductors (28) of the heating circuit extend, wherein the base insulation layer (26) preferably extends within the planar extent of the conductive layer (24).

10. Heating device according to one of the preceding claims, **characterized in that** the conductive layer (24) is configured as a mesh or grid.

11. Heating device according to one of the preceding claims, **characterized in that** the conductive layer (24) is formed in strips with a width of at most 3 mm, wherein the strips preferably run in a meandering pattern.

12. A heating device according to any of the preceding claims, **characterized in that** it comprises a plurality of separately operable heating conductor circuits, each having at least one heating conductor (28), wherein a separate and correspondingly areally extended conductive layer (24) is provided for each heating conductor circuit, within which this heating conductor circuit extends areally, wherein the heating device (15) is designed such that a common base insulation layer (26) for all conductive layers (24) is provided beneath all heating conductor circuits, wherein, in particular, a separate fuse (39) with an electrically conductive connection to a ground connection (20) is provided for each heating conductor circuit and each associated conductive layer (24).

13. A heating device according to one of the preceding claims, **characterized in that** at least one temperature sensor (41) is arranged on the heating device (15), in particular on or above the base insulation layer (26) in the area of a heating circuit or its heating conductors (28).

14. A heating device according to one of the preceding claims, **characterized in that** the heating conductor circuit or its heating conductors (28) are covered by a covering layer and are electrically insulated from the outside, in particular, all heating conductors (28) of a heating conductor circuit, wherein, preferably, all heating conductor circuits of the heating device (15) are covered by a common covering layer, wherein, in particular, the covering layer extends over the base insulation layer (26) but not over the conductive layer (24) located beneath the base insulation layer (26).

15. An electrical appliance (11) comprising at least one heating device (15) according to one of the preceding claims, **characterized in that** the electrical appliance is a water-carrying household appliance (11) and the heating device (15) heats flowing or standing water in a water tank, in a water flow path, or in a pump.

## Revendications

1. Dispositif de chauffage (15) comprenant :
- un support (17),
- une couche d'isolation de base électriquement isolante (26) sur le support (17),
- au moins un circuit de conducteurs chauffants sur la couche d'isolation de base (26), ledit au moins un circuit de conducteurs chauffants comportant au moins un conducteur chauffant (28),
- des raccordements électriques (29) au circuit de conducteurs chauffants,
dans lequel
- une couche isolante supplémentaire (22) électriquement isolante est disposée sur le support (17), sous la couche d'isolation de base (26) et entre celle-ci et le support (17),
- une couche conductrice (24) est répartie sur toute la surface de la couche isolante supplémentaire (22) de telle sorte que la couche d'isolation de base (26) repose sur la couche conductrice (24),
**caractérisé en ce que**
- une borne de masse (20) est prévue sur le support (17) ou sur la couche d'isolation supplémentaire (22), laquelle est reliée à la masse, et **en ce que**
- un fusible (39) est disposé entre la couche conductrice (24) et le support (17) ou la borne de masse (20), en tant que seule connexion électrique entre la couche conductrice (24) et le support (17) ou la borne de masse (20).

2. Dispositif de chauffage selon la revendication 1, **caractérisé en ce que** le support (17) est électriquement conducteur et que la borne de masse (20) est disposée sur le support (17), le fusible (39) s'étendant directement de la couche conductrice (24) jusqu'au support (17) et étant relié électriquement à celui-ci et donc à la borne de masse (20).

3. Dispositif de chauffage selon la revendication 1 ou 2, **caractérisé en ce qu'**un champ de contact électriquement conductrice (37) est appliquée sur le support (17) à côté de la couche isolante supplémentaire (22) et **en ce que** le fusible (39) s'étend directement de la couche conductrice (24) jusqu'au champ de contact (37) et est relié à celui-ci de manière électriquement conductrice, le support (17) étant électriquement conducteur et comportant la borne de masse (20), le champ de contact (37) ayant de préférence une hauteur telle qu'une face supérieure du champ de contact (37) se trouve au niveau d'une face supérieure de la couche conductrice (24).

4. Dispositif de chauffage selon la revendication 1, **caractérisé en ce qu'**un champ de contact supplémentaire est appliqué sur la couche isolante supplémentaire (22) et que ce champ de contact supplémentaire est relié de manière électriquement conductrice à une borne de masse (20), le fusible (39) étant relié de manière électriquement conductrice au champ de contact supplémentaire.

5. Dispositif de chauffage selon l'une des revendications précédentes, **caractérisé en ce que** le fusible (39) est réalisé sous la forme d'une pièce métallique, de préférence d'une pièce métallique exposée ou s'étendant librement, le fusible (39) étant notamment réalisé sous la forme d'un composant CMS destiné à être fixé et mis en contact électrique par soudure CMS.

6. Dispositif de chauffage selon l'une des revendications précédentes, **caractérisé en ce que** le fusible (39) est conçu comme un fusible à action rapide (39), présentant notamment un temps de réaction inférieur à 50 ms.

7. Dispositif de chauffage selon l'une des revendications précédentes, **caractérisé en ce que** le fusible (39) est conçu de telle sorte qu'il se fond lorsqu'une intensité de courant maximale de 0,5 A est atteinte, de préférence lorsqu'une intensité de courant maximale de 0,1 A est atteinte.

8. Dispositif de chauffage selon l'une des revendications précédentes, **caractérisé en ce que** le fusible (39) est conçu de telle sorte qu'après sa fusion, la couche isolante supplémentaire (22) isole électriquement le conducteur chauffant (28) par rapport au support (17) sans subir de dommages.

9. Dispositif de chauffage selon l'une des revendications précédentes, **caractérisé en ce que** la couche conductrice (24) et la couche d'isolation de base (26) présentent une extension plane à l'intérieur de laquelle s'étendent les conducteurs chauffants (28) du circuit de chauffage, la couche d'isolation de base (26) s'étendant de préférence à l'intérieur de l'extension plane de la couche conductrice (24).

10. Dispositif de chauffage selon l'une des revendications précédentes, **caractérisé en ce que** la couche conductrice (24) est réalisée sous forme de réseau ou de grille.

11. Dispositif de chauffage selon l'une des revendications précédentes, **caractérisé en ce que** la couche conductrice (24) est réalisée sous forme de bandes d'une largeur maximale de 3 mm, les bandes s'étendant de préférence en méandres.

12. Dispositif de chauffage selon l'une des revendications précédentes, **caractérisé en ce qu'**il comporte plusieurs circuits de conducteurs chauffants pouvant fonctionner séparément, comprenant chacun au moins un conducteur chauffant (28), une couche conductrice (24) distincte et s'étendant sur une surface correspondante étant prévue pour chaque circuit de conducteurs chauffants, à l'intérieur de laquelle ce circuit de conducteurs chauffants s'étend sur toute la surface, le dispositif de chauffage (15) est conçu de telle sorte qu'une couche d'isolation de base commune (26) est prévue pour l'ensemble des couches conductrices (24) sous l'ensemble des circuits de conducteurs chauffants, un fusible (39) propre à chaque circuit de conducteurs chauffants et à chaque couche conductrice (24) associée étant notamment prévu, avec une connexion électriquement conductrice vers une borne de masse (20).

13. Dispositif de chauffage selon l'une des revendications précédentes, **caractérisé en ce qu'**au moins un capteur de température (41) est disposé sur le dispositif de chauffage (15), en particulier sur ou au-dessus de la couche d'isolation de base (26) dans la zone d'un circuit de chauffage ou de ses conducteurs chauffants (28).

14. Dispositif de chauffage selon l'une des revendications précédentes, **caractérisé en ce que** le circuit de conducteurs chauffants ou ses conducteurs chauffants (28) sont recouverts d'une couche de recouvrement et sont isolés électriquement de l'extérieur, en particulier tous les conducteurs chauffants (28) d'un circuit de conducteurs chauffants, tous les circuits de conducteurs chauffants du dispositif de chauffage (15) étant de préférence recouverts d'une couche de recouvrement commune, la couche de recouvrement s'étendant notamment sur la couche d'isolation de base (26), mais pas sur la couche conductrice (24) située sous la couche d'isolation de base (26).

15. Appareil électrique (11) comprenant au moins un dispositif de chauffage (15) selon l'une des revendications précédentes, **caractérisé en ce que** l'appareil électrique est un appareil ménager circulant de l'eau (11) et **en ce que** le dispositif de chauffage (15) chauffe de l'eau courante ou stagnante dans un réservoir d'eau, dans un circuit d'écoulement d'eau ou dans une pompe.
